# EUROPÄISCHE PATENTSCHRIFT

(11) **EP 2 450 566 B1**
(45) Veröffentlichungstag und Bekanntmachung des Hinweises auf die Patenterteilung: **21.08.2019**
(21) Anmeldenummer: 11008680.8
(22) Anmeldetag: 29.10.2011
(51) Int. Cl.: F03D 7/02, F03D 7/04

(54) **Windpark, Windenergieanlage in einem Windpark, sowie Betriebssteuerung hierfür**
Wind farm, wind energy assembly in a wind farm and operation control system for same
Parc éolien, éolienne dans un parc éolien ainsi que commande de fonctionnement associée

(30) Priorität: 05.11.2010 DE 102010050591
(43) Veröffentlichungstag der Anmeldung: 09.05.2012
(73) Patentinhaber: Airbus Defence and Space GmbH, 85521 Ottobrunn (DE)
(72) Erfinder: Bettermann, Joachim, 27755 Delmenhorst (DE); Bloch, Boris, 27327 Martfeld (DE); Frye, Andreas, Dr., 28816 Stuhr (DE); Gottschalk, Michael, 27777 Ganderkesee (DE)
(74) Vertreter: Isarpatent

(56) Entgegenhaltungen:
- WO-A1-01/97359
- DE-B3-102009 005 215
- US-A1- 2009 102 198
- US-A1- 2009 202 347

## Beschreibung

Die vorliegende Erfindung betrifft die Energieerzeugung aus Windkraft unter Verwendung von räumlich zu einem "Windpark" zusammengefassten Windenergieanlagen. Insbesondere betrifft die Erfindung einen Windpark nach dem Oberbegriff des Anspruchs 1, ein Verfahren zur Betriebssteuerung von Windenergieanlagen gemäß des Oberbegriffs des Anspruchs 4, eine Windenergieanlage nach dem Oberbegriff des Anspruchs 5, und ein Verfahren zur Betriebssteuerung einer Windenergieanlage nach dem Oberbegriff des Anspruchs 6.

Windenergieanlagen der hier interessierenden Art umfassen eine drehbar gelagerte Rotorstruktur, die typischerweise von einer drehbar gelagerten Rotorwelle, einer Rotornabe an einem Ende der Rotorwelle und einem oder mehreren in Radialrichtung von der Rotornabe abstehenden Rotorblättern (Rotorflügeln) gebildet ist.

Durch die Windkraft wird die Rotorstruktur der Windenergieanlage in Drehung versetzt. Üblicherweise wird die Rotordrehung (mechanische Energie) mittels eines elektrischen Generators in elektrische Energie umgewandelt und diese elektrische Energie beispielsweise in ein elektrisches Netz eingespeist.

Derartige Windenergieanlagen können Störungen beim Betrieb von Radarsystemen hervorrufen. An der Rotorstruktur bzw. deren Rotorblättern reflektierte Radarstrahlung erfährt je nach Einfallsrichtung der Radarstrahlung und Drehstellung bzw. Drehgeschwindigkeit der Rotorstruktur eine Dopplerverschiebung. Bei Radarsystemen mit Bewegtzielerkennung, welche derartige Dopplerverschiebungen auswerten, kann dies unerwünschterweise dazu führen, dass entsprechende Teile der Rotorstruktur, also z. B. Rotorblätter als "Flugobjekte" fehlinterpretiert werden. Indem die zur Radaranlage hin oder von der Radaranlage weg sich bewegenden Rotorstrukturteile Dopplerverschiebungen in der reflektierten Radarstrahlung verursachen, wird unter Umständen eine Zieldarstellung auf dem Radarschirm verursacht, die nicht ohne weiteres von einem realen Flugziel unterschieden werden kann.

Diese Problematik wird noch dadurch verschärft, dass Windenergieanlagen oftmals in einer räumlichen Verteilung einer Vielzahl solcher Windenergieanlagen installiert werden (so genannter "Windpark"). Über einem aus mehreren Windenergieanlagen gebildeten Windpark, deren Rotorstrukturen über die gesamte Windparkfläche Anzeigen auf dem Radarschirm hervorrufen, können reale Flugziele vom Bediener nur sehr schwer und im schlimmsten Fall gar nicht mehr identifiziert werden, wodurch z. B. die Flugsicherheit drastisch eingeschränkt werden kann.

Bei Radarsystemen mit konstanter Falschalarmrate (CFAR, "constant false alarm rate") ist eine Ansprechempfindlichkeit bzw. ein Schwellwert für die Detektion eines Flugzieles in der Regel abhängig von den empfangenen reflektierten Radarsignalen. Dies bedeutet in der Praxis, dass hohe Störreflexionen von Windenergieanlagen den Detektions-Schwellwert hochsetzen und so die Detektion eines realen Flugzieles (mit niedrigeren Reflexionen) ganz verhindern können.

Die besonders störenden Radarreflexionen an sich drehenden Rotorstrukturteilen wie Rotorblättern erfolgen vorwiegend dann, wenn diese Strukturteile sich orthogonal zur Einfallsrichtung der Radarstrahlung erstrecken.

Beispielsweise für eine Windenergieanlage mit einer um eine Horizontalachse drehbar gelagerten Rotorstruktur mit radial davon abstehenden Rotorblättern ergeben sich besonders störende Radarreflexionen dann, wenn ein Rotorblatt senkrecht nach oben oder senkrecht nach unten weist.

Bei einem derartigen, sehr weit verbreiteten "dreiblättrigen" Windenergieanlagentyp, also mit drei in Umfangsrichtung verteilt von einer Rotornabe abstehenden Rotorblättern, ist die Situation "Rotorblatt weist nach oben oder unten" somit 6 Mal während einer kompletten 360°-Rotorumdrehung gegeben.

Durch die Rotation der Radarantenne eines Luftüberwachungs-Radarsystems werden die Windenergieanlagen eines Windparks nicht ständig beleuchtet, sondern periodisch nur in einem Zeitraum, der sich aus der Drehgeschwindigkeit der Radarantenne, der räumlichen Ausdehnung des Windparks, der Breite der Antennenkeule und der Entfernung des Windparks von dem Radarsystem ergibt.

Eine hohe Störung des Radarbetriebes durch den Windpark ergibt sich dann, wenn während des zeitlichen Radar-Beleuchtungsintervalls ein Rotorblatt zumindest einer der Windenergieanlagen senkrecht steht. Da diese Bedingung im hier betrachteten Beispiel 6 Mal während einer Rotorumdrehung erfüllt ist und ein Windpark oftmals eine größere Anzahl von Windenergieanlagen aufweist, ist beim Betrieb eines Windparks im Erfassungsbereich eines Radarsystems mit einer hohen Störhäufigkeit zu rechnen.

Aus dem Stand der Technik sind zwei Lösungsansätze für die vorstehend erläuterte Problematik bekannt:
In der DE 10 2008 024 644 A1 wird beispielsweise vorgeschlagen, Rotorblätter zumindest bereichsweise in einer radarabsorbierenden Bauweise vorzusehen. Nachteilig ist bei diesem Ansatz jedoch die damit einhergehende Verringerung der Gestaltungsfreiheit betreffend Aufbau und Material des Rotorblattes.

Die US 2009/102198 A1 beschreibt ein Verfahren zum Steuern der Drehzahlen von Windturbinen, einschließlich des Bestimmens der Rotordrehzahl einer ersten und einer zweiten Windturbine, des Bestimmens des Rotorazimutwinkels der ersten und der zweiten Windturbine, des Berechnens eines Drehzahlsteuerwertes für die erste Windturbine, basierend auf den bestimmten Rotorazimutwinkeln und Rotordrehzahlen, und des Einstellens der Rotordrehzahl der ersten Windturbine gemäß ihrem Drehzahlsteuerwert.

Die US 2009/202347 A1 beschreibt ein Steuerungssystem zur Minderung der Auswirkungen einer Windturbine auf ein Radarsystem mit einem Sensor, der konfiguriert ist, um einen Betriebszustand des Radarsystems zu erfassen, einem Prozessor, der konfiguriert ist, um einen Betriebszustand der Windturbine zu empfangen und eine Rotationsänderungssequenz basierend auf dem Betriebszustand des Radarsystems und dem Betriebszustand der Windturbine zu bestimmen.

Die DE 10 2009 005215 B3 beschreibt ein Windparksteuerungssystem, das auf einen Windpark mit mehreren Windturbinen anwendbar ist. Das Windparksteuerungssystem umfasst ein Kommunikationsmodul zum Austausch von Daten mit den Windturbinen und ein Verarbeitungsmodul zum Berechnen einer durchschnittlichen Windgeschwindigkeit auf der Basis von Windgeschwindigkeiten an den Windturbinen, um eine kollektive Rotorgeschwindigkeit der Windturbinen gemäß einer im Voraus festgelegten Beziehung zwischen Windgeschwindigkeit und der Rotorgeschwindigkeit zu berechnen.

Die WO 01/97359 A1 beschreibt Vorrichtungen und Verfahren, bei denen die Wellen verschiedener Turbinen mit einer Phasenverschiebung synchronisiert werden, damit die Turbinenschaufeln nicht gleichzeitig ihre jeweiligen Türme passieren.

Ein anderer Ansatz zur Lösung der Problematik besteht darin, bei der Neuplanung eines Windparks eine relativ zum Standort einer Radaranlage und hinsichtlich der Radarsystemparameter vorteilhafte räumliche Anordnung der einzelnen Windenergieanlagen vorzusehen. Abgesehen von einer damit einhergehenden Einschränkung der Gestaltungsfreiheit für den Windpark (bzw. für das Radarsystem) ist die damit erzielbare Verringerung von Störungen des Radarbetriebes oftmals unbefriedigend.

Es ist daher eine Aufgabe der vorliegenden Erfindung, durch den Betrieb von Windkraftanlagen in Windparks hervorgerufene Störungen von Radarsystemen zu verringern.

Bei einem Windpark, umfassend mehrere gleichartig jeweils mit einer drehbar gelagerten Rotorstruktur ausgestattete Windenergieanlagen, Steuermittel zur Steuerung des Betriebes der einzelnen Windenergieanlagen und einer Kommunikationseinrichtung wird diese Aufgabe erfindungsgemäß dadurch gelöst, dass die Steuermittel dazu ausgebildet sind, die Drehbewegungen der Rotorstrukturen wenigstens einiger der Windenergieanlagen des Windparks zu synchronisieren und mittels der Kommunikationseinrichtung eine Soll-Drehbewegung und/oder eine oder mehrere sensorisch erfasste Drehbewegungen der Rotorstrukturen an ein Radarsystem zu kommunizieren.

Insbesondere können z. B. die Rotorstrukturen eines Großteils oder sogar sämtlicher Windenergieanlagen des Windparks synchronisiert werden.

Die vorteilhafte Wirkung der Synchronisierung sei am oben bereits erwähnten Beispiel eines typischen Windparks erläutert, der aus einer Vielzahl von Windenergieanlagen mit um eine Horizontalachse rotierenden Rotorstrukturen gebildet ist, die z. B. jeweils drei in Umfangsrichtung verteilt angeordnete Rotorblätter aufweisen.

Die Synchronisierung hat in diesem Fall zur Folge, dass die Rotorblätter der betreffenden (miteinander synchronisierten) Windenergieanlagen mehr oder weniger gleichzeitig senkrecht nach oben bzw. senkrecht nach unten weisen und somit die Zeitintervalle, in denen die Störungen auftreten, drastisch verringert bzw. minimiert werden. Es sinkt die Wahrscheinlichkeit senkrecht stehender Rotorblätter und somit die Wahrscheinlichkeit störender Radarreflexionen während des Radar-Beleuchtungsintervalls beispielsweise einer rotierenden Radarantenne. Die Erfindung hat daher gegenüber dem Stand der Technik den Vorteil, dass die Störhäufigkeit reduziert ist.

Radarsysteme unterteilen einen Radarerfassungsbereich typischerweise in mehrere "Radar-Auflösungszellen", wobei aus den einzelnen Radar-Auflösungszellen rückreflektierte Radarstrahlung jeweils separat verarbeitet bzw. ausgewertet wird. Dieser Umstand lässt sich im Rahmen der Erfindung in überraschend vorteilhafter Weise in einer Ausführungsform ausnutzen, bei welcher nicht eine gemeinsame Synchronisierung der Drehbewegungen sämtlicher Rotorstrukturen des Windparks vorgenommen wird, sondern mehrere jeweilige Synchronisierungen der Drehbewegungen derjenigen Rotorstrukturen vorgenommen werden, die sich in ein und derselben Radar-Auflösungszelle befinden.

Aufgrund der separaten Auswertung der rückreflektierten Radarstrahlen, die aus verschiedenen Radar-Auflösungszellen kommen, wird auch bei einer derartigen Ausführungsvariante (mit mehreren, jeweils einer Radar-Auflösungszelle zugeordneten Synchronisierungen) die erfindungsgemäß erzielte Verringerung von Störungen im gesamten Radarerfassungsbereich sichergestellt. Besonders vorteilhaft ist hierbei darüber hinaus die Verringerung eines zur Synchronisierung erforderlichen "Synchronisierungsaufwandes" und die Verringerung eines durch die Synchronisierung hervorgerufenen "Effizienzverlustes" des Gesamtsystems (Windpark). Aufgrund der räumlichen Begrenzung jeder Radar-Auflösungszelle sind die innerhalb jeder Radar-Auflösungszelle betrachteten natürlichen Schwankungen der Windrichtung und Windstärke kleiner als die entsprechenden Schwankungen über den gesamten Windpark betrachtet. Insofern ist jede einzelne Synchronisierung innerhalb einer Radar-Auflösungszelle wesentlich unproblematischer (z. B. hinsichtlich der Energieumsetzungseffizienz) als eine einzige Synchronisierung über einen räumlich weiter ausgedehnten Windpark.

Zur weiteren Erläuterung der Störungsreduzierung sei beispielsweise der Fall von 5 Windenergieanlagen mit dreiblättrigen Rotorstrukturen innerhalb einer Radar-Auflösungszelle betrachtet. Stehen die Rotorstrukturen bezüglich der Ausrichtung ihrer Rotorblätter zu einem gegebenen Zeitpunkt unabhängig voneinander (unkorreliert), so wird bei angenommen gleicher Drehgeschwindigkeit nach einer vollständigen 360°-Umdrehung aller Rotorstrukturen die Situation "mindestens ein Rotorblatt innerhalb der Radar-Auflösungszelle steht senkrecht" maximal 30 Mal auftreten. Bei hinreichend langem Beleuchtungsintervall bzw. bei Dauerbeleuchtung durch das Radarsystem würden die Windenergieanlagen der Auflösungszelle also 30 Mal eine Störung im Verlauf einer Rotorumdrehung hervorrufen. Wenn jedoch erfindungsgemäß die 5 Windenergieanlagen bezüglich der Drehbewegung bzw. Stellung ihrer Rotorblätter synchronisiert werden, so tritt die beschriebene Störungssituation nur noch 6 Mal während einer Rotorumdrehung auf. Dies entspricht einer Verringerung der Störhäufigkeit in der Auflösungszelle um einen Faktor 30/6 = 5. Die Störhäufigkeit der Auflösungszelle entspricht demnach nur noch derjenigen einer einzigen Windenergieanlage. Bei einer sich drehenden Radarantenne vermindert sich die Wahrscheinlichkeit von Störungen entsprechend.

In einer Ausführungsform ist vorgesehen, dass die Steuermittel des Windparks an den betreffenden Windenergieanlagen jeweilige Erfassungseinrichtungen zur Erfassung der Drehbewegung (z. B. Drehwinkel) der Rotorstruktur umfassen.

Zur Charakterisierung der "Drehbewegung" kann insbesondere eine zeitlich aufgelöste (bzw. zu diskreten Zeitpunkten definierte) Drehstellung wie z. B. Drehwinkel der sich drehenden Rotorstruktur herangezogen werden. Eine andere mögliche Repräsentation der Drehbewegung kann z. B. aus Drehwinkelgeschwindigkeit und Drehwinkelphase gebildet werden.

In einer Ausführungsform umfassen die Steuermittel an den betreffenden Windenergieanlagen jeweilige Lastvariationseinrichtungen zur Variation einer der Drehbewegung entgegenwirkenden Last.

In einer Ausführungsform umfassen die Steuermittel an den betreffenden Windenergieanlagen jeweilige Rotorachsen- und/oder Rotorblattverstelleinrichtungen zur Variation der Windkraftumsetzungseffizienz.

Insbesondere derartige Lastvariationseinrichtungen bzw. Rotorachsen- und/oder Rotorblattverstelleinrichtungen können im Rahmen der Erfindung vorteilhaft zur Erzielung der Synchronisierung genutzt (geeignet angesteuert) werden.

Der Begriff "Synchronisierung" im Sinne der Erfindung ist sehr breit zu verstehen, nämlich als jedwede Beeinflussung der Drehbewegungen der betreffenden Rotorstrukturen dahingehend, dass die für ein Radarsystem besonders störenden Drehstellungen der einzelnen Rotorstrukturen nicht unabhängig voneinander und zufällig im Verlauf der Zeit auftreten, sondern mehr oder weniger "zeitlich gebündelt" auftreten (Im Idealfall gleichzeitig). Um eine solche Synchronisierung zu erzielen, müssen die betreffenden Drehbewegungen sowohl hinsichtlich der Drehgeschwindigkeiten als auch hinsichtlich der "Drehphasen" aneinander angepasst werden. Es versteht sich, dass die Störungsverringerung zwar prinzipiell umso besser ist, je exakter die Synchronisierung bewerkstelligt wird, dass jedoch umgekehrt auch eine nicht ganz exakte Synchronisierung, je nach Ausprägung, bereits eine vorteilhafte Störungsreduzierung bewirkt.

Die Erfindung ist sowohl für Windparks an Land als auch Windparks zu Wasser ("Offshore-Windparks") vorteilhaft einsetzbar. In einer Ausführungsform umfasst der Windpark wenigstens 10 Windenergieanlagen, insbesondere z. B. wenigstens 20 oder z. B. wenigstens 50 Windenergieanlagen.

Die Erfindung eignet sich insbesondere für Windenergieanlagen, bei denen die Rotorstrukturen jeweils von einem Rotor mit radial langgestreckt davon abstehenden Rotorblättern gebildet ist, wie beispielsweise einem dreiblättrigen Rotor mit in Umfangsrichtung gleichmäßig (in 120°-Intervallen) angeordneten Rotorblättern.

Es versteht sich, dass die Erfindung prinzipiell auch für Windenergieanlagen mit andersartigen Rotorstrukturen verwendbar ist, solange diese Rotorstrukturen eine gewisse "Gleichartigkeit" besitzen, welche eine "Synchronisierung" von deren Drehbewegungen ermöglicht.

Wenngleich eine horizontale Orientierung der Drehachse der Rotorstruktur bei Windenergieanlagen sehr weit verbreitet ist, so ist die Orientierung dieser Drehachse im Rahmen der Erfindung von untergeordneter Bedeutung. Die Erfindung könnte beispielsweise auch für Windkraftanlagen mit vertikal orientierter RotorDrehachse eingesetzt werden.

In einer Ausführungsform umfassen die Steuermittel eine zentrale Steuereinheit zur Vorgabe einer bestimmten Soll-Drehbewegung für die betreffenden (miteinander zu synchronisierenden) Rotorstrukturen. Die Steuereinheit kann hierbei innerhalb des Windparks, beispielsweise in einer der Windenergieanlagen integriert vorgesehen sein, oder aber außerhalb des Windparks angeordnet und über eine kabelgebundene oder drahtlose Kommunikationsverbindung (auch z. B. eine Internetverbindung beinhaltend) mit dem Windpark in Verbindung stehen.

In einer spezielleren Ausführungsform ist die Soll-Drehbewegung als eine sensorisch erfasste Drehbewegung einer bestimmten der Rotorstrukturen vorgesehen. In diesem Fall erfolgt die Synchronisation mehrerer Windenergieanlagen bezüglich der Stellung ihrer Rotorstrukturen z. B. dadurch, dass Drehgeschwindigkeit und Rotorstellung an einer einzigen Windenergieanlage ("Master-Windenergieanlage") registriert werden und z. B. entsprechende Informationen hierüber an die übrigen zu synchronisierenden Windenergieanlagen übermittelt werden. Diese Übermittlung kann kabelgebunden und/oder kabellos (per Funk) erfolgen, direkt und/oder indirekt z. B. unter Verwendung einer zentralen Steuereinheit, welche baulich zusammengefasst bzw. identisch sein kann mit der bereits erwähnten Steuereinheit zur Vorgabe der Soll-Drehbewegung. Auf Basis der übermittelten Informationen können die übrigen Windenergieanlagen sodann durch deren eigene Steuereinrichtungen die Drehbewegungen ihrer Rotorstrukturen auf die vorgegebene Soll-Drehbewegung synchronisieren.

In einer Ausführungsvariante ist vorgesehen, dass sämtliche zu synchronisierende Windenergieanlagen jeweils eine Information über ihre eigene (sensorisch erfasste) Drehbewegung an eine zentrale Steuereinheit übermitteln, woraufhin diese zentrale Steuereinheit gemäß eines Synchronisierungsalgorithmus entsprechende Korrekturbefehle an die einzelnen Windenergieanlagen zurückliefert, auf deren Basis die Windenergieanlagen mittels ihrer eigenen Steuereinrichtungen ihre Drehbewegungen entsprechend anpassen.

Die vorstehend erläuterten Details betreffend die Verwendung einer sensorisch erfassten Drehbewegung einer bestimmten der Rotorstrukturen als die "Soll-Drehbewegung" können in analoger Weise auch für Ausführungsformen vorgesehen werden, bei denen die Soll-Drehbewegung in anderer Weise festgelegt wird. Bei einer in dieser Hinsicht vorteilhaften Ausführungsform ist z. B. vorgesehen, dass die Soll-Drehbewegung von einer Steuereinheit gemäß eines Betriebssteuerungsalgorithmus auf Basis einer Information über die momentanen (sensorisch erfassten) Drehbewegungen sämtlicher der zu synchronisierenden Windenergieanlagen festgelegt wird. Beispielsweise kann die Soll-Drehbewegung hierbei als Resultat einer "Mittelwertbildung" betreffend diese momentanen einzelnen Drehbewegungen festgelegt (berechnet) werden. Die so vorgegebene Soll-Drehbewegung und/oder darauf basierend errechnete Korrekturbefehle können sodann kontinuierlich an die betreffenden Windenergieanlagen übermittelt werden.

Ganz prinzipiell kann die erfindungsgemäße Synchronisierung eine Abbremsung und/oder Beschleunigung der Rotorbewegung der einzelnen Windenergieanlagen erfordern. Beides ist in Anbetracht der üblicherweise ohnehin vorhandenen technischen Ausrüstung moderner Windenergieanlagen mehr oder weniger unproblematisch. Sowohl ein Abbremsen als auch ein Beschleunigen der Drehbewegung kann in zweierlei Art und Weise bewirkt werden, nämlich einerseits durch eine Variation derjenigen Last, welche der Drehbewegung entgegenwirkt, also z. B. durch einen elektrischen Generator bewirkte Last, und andererseits durch eine Variation der Windkraftumsetzungseffizienz der betreffenden Rotorstruktur, also z. B. Variation der aerodynamischen Gegebenheiten wie z. B. Drehen der Rotorblätter um ihre Längsachse ("Pitchen") und/oder Verdrehen einer horizontalen Rotordrehachse um eine Vertikalachse.

Um eine Drehbewegung abzubremsen, kann an der betreffenden Windenergieanlage z. B. die elektrische Generatorlast erhöht werden und/oder z. B. der Anstellwinkel der Rotorblätter "verschlechtert" werden. Umgekehrt, falls eine Beschleunigung der Drehbewegung erforderlich ist, kann die elektrische Generatorlast verringert und/oder eine "verbesserte Aerodynamik" eingestellt werden. In diesem Zusammenhang erweist es sich als großer Vorteil, dass moderne Windkraftanlagen zum Zwecke der Optimierung ihres Wirkungsgrades keineswegs mit "maximaler Rotordrehgeschwindigkeit" betrieben werden. Somit besteht vorteilhaft ein gewisser Spielraum, was die Drehgeschwindigkeit der Rotorstruktur anbelangt, welcher vorteilhaft für die erfindungsgemäße Synchronisierung nutzbar ist.

In einer erfindungsgemäßen Ausführungsform umfasst der Windpark eine Kommunikationseinrichtung zur Kommunikation einer Soll-Drehbewegung und/oder einer oder mehrerer sensorisch erfasster Drehbewegungen der Rotorstrukturen an ein Radarsystem. Diese Kommunikationseinrichtung kann z. B. an die erwähnte Steuereinheit angebunden sein, welcher eine Information über die Soll-Drehbewegung vorliegt bzw. welche diese Soll-Drehbewegung vorgibt. Mit dieser Ausführungsform sind insbesondere zwei Vorteile erzielbar: Einerseits, im ordnungsgemäßen Betrieb des Windparks, kann damit einem Radarsystem eine genaue Information darüber übermittelt werden, zu welchen Zeitpunkten die eingangs erwähnten störenden Radarreflexionen auftreten, so dass auf Basis dieser Information eine entsprechende Anpassung (z. B. Synchronisierung) der Radar-Beleuchtungsintervalle erfolgen kann, so dass die Zeitpunkte der Störungen außerhalb dieser Beleuchtungsintervalle liegen. Andererseits kann damit dem Radarsystem, in dessen Erfassungsbereich der Windpark liegt, ein etwaig nicht ordnungsgemäßer Betrieb des Windparks kommuniziert werden.

Ein erfindungsgemäßes Verfahren zur Steuerung des Betriebes mehrerer gleichartig jeweils mit einer drehbar gelagerten Rotorstruktur ausgestatteter Windenergieanlagen in einem Windpark ist dadurch gekennzeichnet, dass die Drehbewegungen der Rotorstrukturen wenigstens einiger der Windenergieanlagen synchronisiert werden und dass die Drehbewegungen der Rotorstrukturen an ein Radarsystem kommuniziert werden.

Die oben für den Windpark bereits beschriebenen besonderen Ausführungsformen und Gestaltungsmöglichkeiten können in analoger Weise auch für dieses erfindungsgemäße Betriebssteuerungsverfahren vorgesehen werden.

Gemäß eines weiteren Aspekts der Erfindung ist eine Windenergieanlage in einem Windpark vorgesehen, umfassend
- eine Erfassungseinrichtung zur Erfassung der Drehbewegung einer drehbar gelagerten Rotorstruktur der Windenergieanlage,
- eine ansteuerbare Lastvariationseinrichtung zur Variation einer der Drehbewegung der Rotorstruktur entgegenwirkenden Last und/oder eine ansteuerbare Effizienzverstelleinrichtung zur Variation der Windkraftumsetzungseffizienz der Rotorstruktur, und
- eine Steuereinrichtung zur Ansteuerung der Lastvariationseinrichtung bzw. der Effizienzverstelleinrichtung,
wobei die Steuereinrichtung dazu ausgebildet ist, die Lastvariationseinrichtung und/oder die Effizienzverstelleinrichtung für eine Synchronisation der Drehbewegung der Rotorstruktur mit einer Soll-Drehbewegung anzusteuern, die von einem Radarsystem an die Steuereinrichtung der Windenergieanlage kommuniziert wird, und wobei die Erfassungseinrichtung dazu ausgebildet ist, die Drehbewegung der Rotorstruktur an das Radarsystem zu kommunizieren.

Gemäß eines weiteren Aspekts der Erfindung ist ein Verfahren zur Steuerung des Betriebes einer Windenergieanlage in einem Windpark vorgesehen, umfassend
- Erfassung der Drehbewegung einer drehbar gelagerten Rotorstruktur der Windenergieanlage, und
- Variation einer der Drehbewegung der Rotorstruktur entgegenwirkenden Last und/oder Variation der Windkraftumsetzungseffizienz der Rotorstruktur,
wobei die Lastvariation und/oder die Effizienzverstellung für eine Synchronisation der Drehbewegung der Rotorstruktur mit einer Soll-Drehbewegung durchgeführt wird, die von einem Radarsystem an die Windenergieanlage kommuniziert wird, wobei die Drehbewegung der Rotorstruktur an das Radarsystem kommuniziert wird.

Auch für die erfindungsgemäße Windenergieanlage und das erfindungsgemäße Betriebssteuerungsverfahren einer Windenergieanlage ergeben sich entsprechende Weiterbildungen insbesondere aus der obigen Erläuterung des erfindungsgemäßen Windparks.

Die Erfindung wird nachfolgend anhand von Ausführungsbeispielen mit Bezug auf die beigefügten Zeichnungen weiter beschrieben. Es stellen jeweils schematisch dar:
- **Fig. 1**: einen Windpark mit mehreren Windenergieanlagen in einem unsynchronisierten Zustand,
- **Fig. 2**: den Windpark von Fig. 1 in einem synchronisierten Zustand,
- **Fig. 3**: eine kabelgebundene Informationsübertragung in einem Windpark,
- **Fig. 4**: eine kabellose Informationsübertragung in einem Windpark,
- **Fig. 5**: eine kabellose Informationsübertragung in einem Windpark gemäß eines modifizierten Ausführungsbeispiels, und
- **Fig. 6**: ein Ablaufdiagramm einer geregelten Anpassung der Drehbewegung einer Windenergieanlagen-Rotorstruktur.

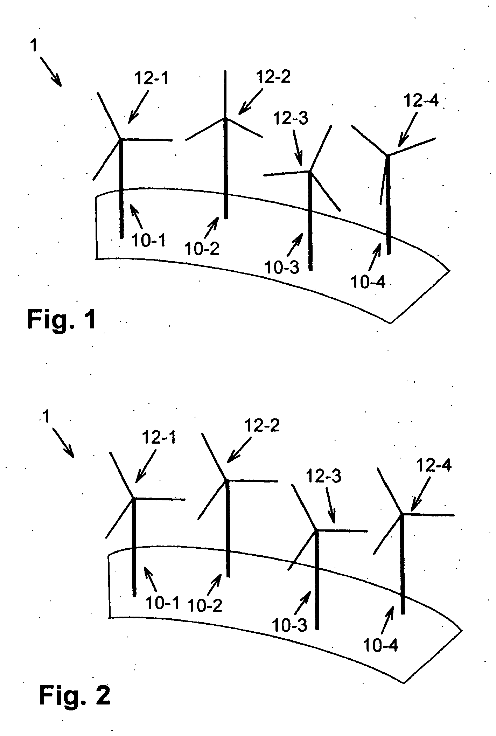

Fig. 1 zeigt einen Windpark 1, umfassend vier Windenergieanlagen 10-1 bis 10-4 und (nicht dargestellte) Steuermittel zur Steuerung des Betriebes der einzelnen Windenergieanlagen 10-1 bis 10-4.

Die Bezugszahlen von in einer Ausführungsform mehrfach vorgesehenen, in ihrer Wirkung jedoch analogen Komponenten, wie z. B. den Windenergieanlagen 10-1 bis 10-4, sind durchnumeriert (jeweils ergänzt durch einen Bindestrich und eine fortlaufende Zahl). Auf einzelne solcher Komponenten oder auf die Gesamtheit solcher Komponenten wird im Folgenden auch durch die nicht-ergänzte Bezugszahl Bezug genommen.

Die Windenergieanlagen 10 sind gleichartig jeweils mit einer drehbar gelagerten Rotorstruktur 12 ausgestattet, mittels welcher die Windenergie in eine Drehbewegung der Rotorstruktur 12 umgewandelt und auf diese Weise zum Drehantrieb eines elektrischen Generators genutzt wird.

Die "Gleichartigkeit" der Ausstattung der Windenergieanlagen 10 mit den Rotorstrukturen 12 besteht im dargestellten Ausführungsbeispiel darin, dass jede Rotorstruktur 12 von einem um eine Horizontalachse drehbar gelagerten Rotor mit drei in Umfangsrichtung gleichmäßig verteilt radial abstehenden Rotorblättern gebildet ist.

Im dargestellten Ausführungsbeispiel handelt es sich bei den Windenergieanlagen 10 um den sehr weit verbreiteten Anlagentyp umfassend einen vertikal aufragenden Turm mit einem am oberen Turmende um eine Vertikalachse drehbaren Maschinengehäuse, in welchem eine Rotorwelle der Rotorstruktur 12 drehbar gelagert und direkt oder indirekt (z. B. über ein Getriebe) mit dem elektrischen Generator verbunden ist. An einem aus dem Maschinengehäuse herausragenden Ende der Rotorwelle befindet sich eine Rotornarbe, von welcher die erwähnten und in Fig. 1 zeichnerisch dargestellten Rotorblätter abstehen. In jedem Maschinengehäuse befindet sich außerdem eine Steuereinheit, mittels welcher auf Basis von sensorisch erfassten Betriebsparametern (z. B. Windrichtung, Windgeschwindigkeit etc.) und/oder eingegebener Steuersignale ansteuerbare Komponenten der Windenergieanlage angesteuert werden. Zu diesen ansteuerbaren Komponenten zählen typischerweise Antriebseinrichtungen mittels welchen die Rotorblätter um ihre Längsachse gedreht werden können, um deren Anstellwinkel zu verändern, sowie zum Drehen des Maschinengehäuses und somit der Rotordrehachse um die Vertikalachse, um den Azimutwinkel der Rotorstruktur 12 bezüglich der Windrichtung anzupassen. Ferner können ansteuerbare Komponenten im Bereich des elektrischen Generators (z. B. zur Einstellung der abgegebenen elektrischen Leistung) und im Bereich des gegebenenfalls vorhandenen Getriebes vorgesehen sein.

Jede Windenergieanlage 10 umfasst außerdem eine Erfassungseinrichtung zur Erfassung von Parametern der Drehbewegung der zugehörigen Rotorstruktur 12. Im dargestellten Beispiel wird sowohl eine Drehgeschwindigkeit (z. B. Drehwinkelgeschwindigkeit oder Drehzahl) als auch eine "Drehphase" erfasst (gemessen oder aus Messgrößen ermittelt). Wesentlich ist, dass die Erfassung der Drehbewegung der Rotorstruktur 12 eine zeitaufgelöste Information über die "Drehstellung" des Rotors 12 liefert.

Ganz allgemein kann die "Drehstellung" bei jeder Rotorstruktur 12 z. B. durch einen im 360°-Intervall (eine Rotorumdrehung) liegenden Drehwinkel angegeben werden. Nachdem zumeist, und so auch im dargestellten Ausführungsbeispiel die Rotorstruktur 12 eine bestimmte Symmetrie besitzt, kann die Drehstellung im Sinne der Erfindung oftmals "vereinfacht" durch einen Drehwinkel innerhalb eines Drehwinkelintervalls angegeben werden, welches kleiner als das 360°-Intervall entsprechend einer vollen Rotorumdrehung ist.

Die im dargestellten Ausführungsbeispiel dreizählige Rotationssymmetrie der Rotorstruktur 12 erlaubt es für die Zwecke der Erfindung, die Drehstellung der Rotorstruktur 12 als Drehwinkel innerhalb eines 120°-Intervalls auszudrücken. Eine Drehung der Rotorstruktur 12 um 120° führt zu keiner Änderung der "Drehstellung" in diesem Sinne.

Wenngleich im Stand der Technik die einzelnen Steuereinheiten der Windenergieanlagen eines Windparks oftmals mit einer zentralen Steuereinheit, die sich innerhalb oder außerhalb des Windparks befinden kann, in Kommunikationsverbindung stehen, so arbeiten die einzelnen Steuereinheiten der Windenergieanlagen insofern unabhängig voneinander, als bei jeder Windenergieanlage die ansteuerbaren Komponenten für eine möglichst effiziente Umsetzung der Windenergie in elektrische Energie betrieben werden.

Bei dem dargestellten Windpark 1 besteht jedoch eine Besonderheit darin, dass (zumindest in einem Betriebsmodus) die Drehbewegungen der Rotorstrukturen 12 wenigstens einiger, beispielsweise sämtlicher der Windenergieanlagen 10 synchronisiert werden. Mit anderen Worten besitzen die betreffenden Rotorstrukturen 12 in diesem Betriebsmodus zu jedem Zeitpunkt mehr oder weniger identische Drehstellungen.

In einem nicht-synchronisierten Zustand der Drehbewegungen wird sich in der Praxis eine mehr oder weniger zufällige Verteilung der Drehwinkelstellungen der einzelnen Rotorstrukturen 12 ergeben. Demgegenüber wird die über den betreffenden Drehwinkelbereich betrachtete Häufigkeitsdichte dieser Drehwinkelstellungen im synchronisierten Zustand von einer im Wesentlichen konstanten Häufigkeitsdichte nennenswert abweichen. Im synchronisierten Zustand wird die Häufigkeitsdichte der Drehwinkelstellungen der betreffenden Rotorstrukturen 12 wenigstens ein mehr oder weniger stark ausgeprägtes Maximum aufweisen.

Um dies zu bewerkstelligen, können die Steuermittel des Windparks 1 beispielsweise eine zentrale Steuereinheit zur Vorgabe einer bestimmten Soll-Drehbewegung für die zu synchronisierenden Rotorstrukturen 12 umfassen.

Durch eine geeignete Kommunikation zwischen den betreffenden Windenergieanlagen 10 und/oder der erwähnten zentralen Steuereinheit kann eine solche Synchronisierung bewirkt werden.

Fig. 2 zeigt den Windpark 1 in einem synchronisierten Zustand, bei welchem die einzelnen Rotorstrukturen 12-1 bis 12-4 zu jedem Zeitpunkt eine identische, durch die Soll-Drehbewegung definierte Drehstellung aufweisen. Demgegenüber sind die Drehstellungen der Rotorstrukturen 12-1 bis 12-4 bei dem in Fig. 1 dargestellten Zustand unkorreliert bzw. zufällig verteilt.

Durch die Synchronisierung der Drehbewegungen werden vorteilhaft Störungen beim Betrieb eines (nicht dargestellten) Radarsystems verringert, in dessen Erfassungsbereich sich der Windpark 1 befindet.

Angenommen, die vom Radarsystem ausgestrahlte Radarstrahlung tritt im Wesentlichen in Horizontalrichtung auf die sich drehenden Rotorstrukturen 12 des Windparks 1. In diesem Fall können insbesondere senkrecht nach oben oder senkrecht nach unten weisende Rotorblätter eine größere Dopplerverschiebung der zu einer Radarantenne rückreflektierten Radarstrahlung bewirken, welche unerwünschterweise zu einer Fehlinterpretation dieser Rotorblätter als "Flugobjekte" führen können.

Derartige Störungen sind im dargestellten Ausführungsbeispiel umso gravierender, je häufiger im Windpark 1 die Situation "wenigstens ein Rotorblatt steht senkrecht" auftritt. Im unkorrelierten Zustand gemäß Fig. 1 tritt dieser störende Zustand (bei angenommen im Wesentlichen identischer Drehgeschwindigkeit der Rotorstrukturen 12-1 bis 12-4) insgesamt etwa 4 x 3 x 2 = 24 Mal pro Rotorumdrehung auf (4 Rotorstrukturen, 3 Rotorblätter je Rotorstruktur, 2 Senkrechtstellungen, nämlich nach oben und nach unten, je Rotorblatt).

Im synchronisierten Zustand gemäß Fig. 2 tritt diese Störsituation vorteilhaft nicht so häufig auf, nämlich pro Rotorumdrehung nur 3 x 2 = 6 Mal (3 stets identisch stehende Rotorblattmehrheiten, 2 Senkrechtstellungen, nämlich nach oben und nach unten, pro Rotorblattmehrheit). Dies bedeutet eine Reduzierung der Störhäufigkeit um den Faktor 24/6 = 4. Dieser Faktor entspricht im dargestellten Ausführungsbeispiel der Anzahl an Windenergieanlagen 10 im Windpark 1. Dementsprechend fällt dieser Störungsreduzierungsfaktor bei größeren Windparks, beispielsweise mit wenigstens 20 oder wenigstens 50 Windenergieanlagen entsprechend größer aus.

Insbesondere für einen Windpark, der aus einer größeren Anzahl von Windenergieanlagen gebildet ist, lässt sich diese Störungsreduzierung bereits dadurch erzielen, dass nicht sämtliche Windenergieanlagen des Windparks miteinander auf eine gemeinsame Soll-Drehbewegung synchronisiert werden, sondern jeweils einer bestimmten "Radar-Erfassungszelle" des Radar-Erfassungsbereiches zugehörige Windenergieanlagen miteinander synchronisiert werden. Die jeweils einer Radar-Erfassungszelle zugeordneten Soll-Drehbewegungen können sich hierbei ohne Weiteres voneinander unterscheiden, sowohl hinsichtlich Drehgeschwindigkeit als auch hinsichtlich Drehphase.

Bei der nachfolgenden Beschreibung von weiteren Ausführungsbeispielen werden für gleich wirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

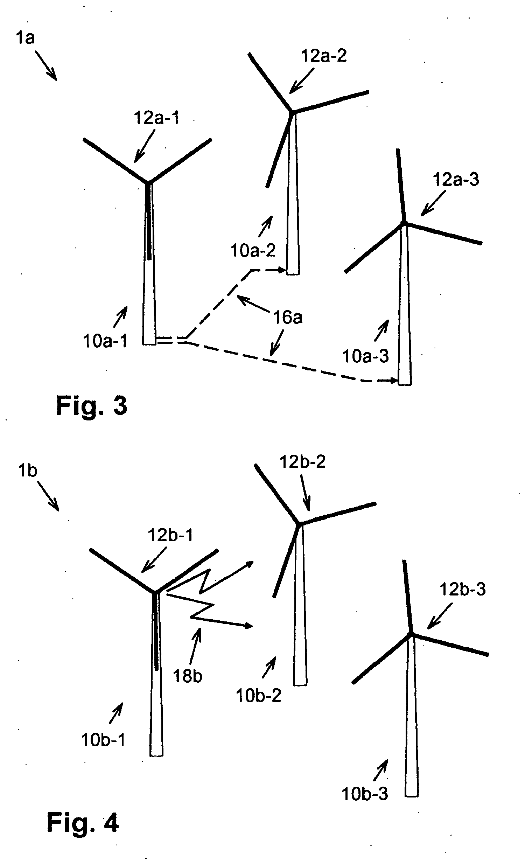

Fig. 3 zeigt einen Windpark 1a umfassend drei Windenergieanlagen 10a-1 bis 10a-3 mit jeweiligen Rotorstrukturen 12a-1 bis 12a-3.

Bei diesem Ausführungsbeispiel ist angenommen, dass die Windenergieanlage 10a-1 als eine "Master-Windenergieanlage" für die Festlegung der Soll-Drehbewegung sämtlicher Windenergieanlagen 10a herangezogen wird. Die sensorisch an der Windenergieanlage 10a-1 erfasste Drehbewegung der Rotorstruktur 12a-1 wird über Kommunikationskabel 16a an die anderen Windenergieanlagen 10a-2 und 10a-3 kommuniziert, so dass deren jeweiligen Steuereinheiten die ansteuerbaren Komponenten für die gewünschte Synchronisierung der Drehbewegungen der Rotorstrukturen 12a-2 bzw. 12a-3 auf die Drehbewegung der Rotorstruktur 12a-1 geeignet ansteuern können.

Fig. 4 zeigt einen Windpark 1b, der sich von dem Windpark 1a lediglich dadurch unterscheiden, dass anstelle der Kommunikationskabel 16a eine drahtlose Kommunikationsverbindung 18b vorgesehen ist, um die vorgegebene Soll-Drehbewegung einer "Master-Windenergieanlage" 10b-1 an die übrigen zu synchronisierenden Windenergieanlagen 10b-2 und 10b-3 zu übermitteln.

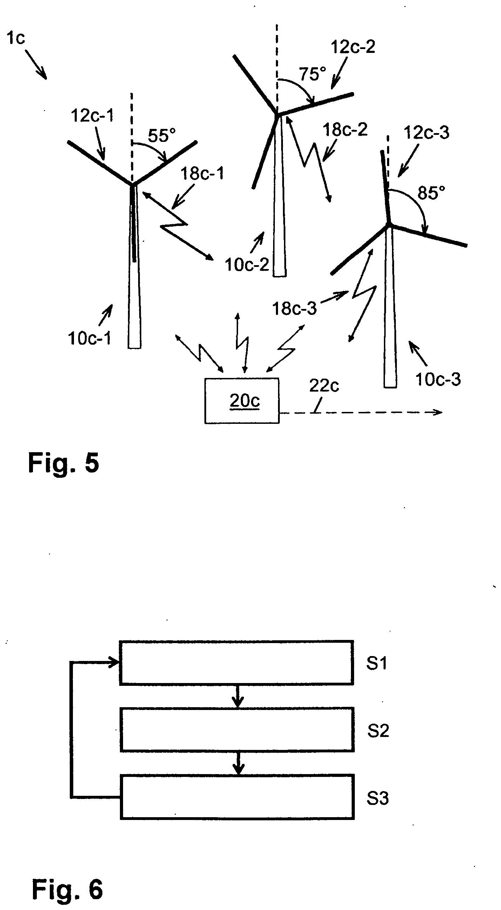

Fig. 5 zeigt einen Windpark 1c, bei welchem in Unterschied zu dem Windpark 1b gemäß Fig. 4 eine Soll-Drehbewegung nicht durch eine der Windenergieanlagen 10c, sondern durch eine zentrale Steuereinheit 20c vorgegeben wird, welche über bidirektionale drahtlose Kommunikationsverbindungen 18c-1 bis 18c-3 mit den einzelnen Windenergieanlagen 10c-1 bis 10c-3 kommuniziert. Hierfür sind die zentrale Steuereinheit 20c sowie die lokalen, an den einzelnen Windenergieanlagen 10c-1 bis 10c-3 vorgesehenen Steuereinheiten mit jeweiligen Kommunikationseinrichtungen (Sende/Empfangseinheiten) ausgestattet.

Die zentrale Steuereinheit 20c umfasst eine programmgesteuerte Rechnereinrichtung, mit welcher die Vorgabe der Soll-Drehbewegung wie folgt durchgeführt wird: Die betreffenden (auf eine Soll-Drehbewegung zu synchronisierenden) Windenergieanlagen, also z. B. sämtliche Windenergieanlagen 10c-1 bis 10c-3 kommunizieren ihre sensorisch erfassten momentanen Drehstellungen bzw. Drehbewegungen über die drahtlosen Kommunikationsverbindungen 18c kontinuierlich an die zentrale Steuereinheit 20c.

Kommuniziert wird zumindest jeweils eine für die momentane Drehstellung der betreffenden Rotorstruktur 12c repräsentative Größe. Als eine solche Größe taugt beispielsweise der in Fig. 5 für jede der Rotorstrukturen 12c eingezeichnete Drehwinkel zwischen einer von der Rotornabe vertikal nach oben verlaufenden Radialrichtung und der radialen Erstreckungsrichtung desjenigen Rotorblattes, welches bei der Rotordrehung zuletzt diese Vertikalrichtung passiert hat. Bei der in Fig. 5 dargestellten "Momentaufnahme" betragen diese Drehwinkel der Rotorstrukturen 12c-1, 12c-2 und 12c-3 55°, 75° bzw. 85°. Die Steuereinheit 20c bildet kontinuierlich (z. B. in kurzen zeitlichen Abständen) den arithmetischen Mittelwert dieser Winkel, was im dargestellten Fall einen mittleren Drehwinkel von (55° + 75° + 85°)/3 = 71,7° liefert. Dieser mittlere Winkel wird als Soll-Drehwinkel in diesem Moment festgelegt. Sodann erfolgen an den einzelnen Windkraftanlagen 10c entsprechende Korrekturen der Drehbewegungen der Rotorstrukturen 12c im Sinne einer Angleichung der tatsächlichen Drehwinkel aneinander. Im dargestellten Beispiel bedeutet dies, dass die Rotorstruktur 12c-1 tendenziell zu beschleunigen ist (da deren Drehwinkel von 55° kleiner als der Soll-Drehwinkel von 71,7° ist), wohingegen die Rotorstrukturen 12c-2 und 12c-3 tendenziell abzubremsen sind (da deren Drehwinkel größer als der Soll-Drehwinkel sind). Durch eine Wiederholung dieser Schritte der Messung eines Ist-Drehzustandes, Vorgabe eines Soll-Drehzustandes und individuelle entsprechende Drehbewegungskorrekturen kann somit eine geregelte Synchronisierung bewerkstelligt werden, bei welcher sich die Drehbewegungen sämtlicher Rotorstrukturen 12c-1 bis 12c-3 mit mehr oder weniger geringen Abweichungen voneinander angleichen.

Sowohl bei der Berechnung eines Soll-Drehwinkels, als auch bei der Berechnung eines für die Drehbewegungskorrektur zweckmäßigen quantitativen Ausmaßes einer Beschleunigung bzw. Abbremsung ist es möglich, dass hierfür auch momentane Drehgeschwindigkeiten (z. B. Drehwinkelgeschwindigkeiten) der betreffenden Rotorstrukturen 12c berücksichtigt werden.

Es versteht sich, dass der Durchschnittsfachmann im Hinblick auf den beabsichtigten Zweck der Rotorsynchronisierung insbesondere unter Mitberücksichtigung der momentanen Drehgeschwindigkeiten und/oder anderer Parameter wie z. B. aktuellen Einstellungsparametern an den einzelnen Windenergieanlagen 10c (z. B. Rotorblattverstellwinkel etc.) oder anderen lokalen Parametern (wie z. B. Windstärke etc.) auch noch andere Algorithmen zur Vorgabe eines Soll-Drehwinkels bzw. einer Soll-Drehgeschwindigkeit ersinnen kann, insbesondere um damit neben der Synchronisierung auch einen möglichst großen Gesamtwirkungsgrad des Windparks 1c zu erzielen. Nachdem es im dargestellten Beispiel bei der Synchronisierung im Wesentlichen lediglich darauf ankommt, dass die Störsituationen "Rotorblatt steht senkrecht nach oben oder unten" möglichst "zeitlich gehäuft" bzw. gleichzeitig auftreten, könnte ein komplizierterer Synchronisierungsalgorithmus beispielsweise auch vorsehen, dass nicht alle Rotorstrukturen 12c mit der gleichen Drehgeschwindigkeit betrieben werden, sondern z. B. ein Teil der Rotorstrukturen 12c mit der halben Drehgeschwindigkeit der übrigen Rotorstrukturen rotiert. Auch mit einer solchen Synchronisierung kann der vorteilhafte Effekt einer zeitlichen Bündelung der Störsituationen "Rotorblatt steht senkrecht" erreicht werden. Hierzu ein Beispiel: Wenn die Rotorstrukturen 12c-1 und 12c-2 mit einer identischen Drehgeschwindigkeit rotieren, so dass nach jeweils 1 s der Störzustand auftritt, so könnte die Rotorstruktur 12c-3 auch mit der halben Drehgeschwindigkeit und passender Drehphase derart betrieben werden, dass an der Rotorstruktur 12c-3 der Störzustand nur alle 2 s auftritt (und zwar möglichst gleichzeitig mit dem Auftreten des Störzustandes an den Rotorstrukturen 12c-1 und 12c-2). Als diejenigen Rotorstrukturen 12c, welche mit der halben Drehgeschwindigkeit rotieren, könnten z. B. diejenigen ausgewählt werden, bei denen die lokale zeitlich gemittelte Windstärke tendenziell niedriger als bei den übrigen Rotorstrukturen ist.

Die Berechnung der quantitativen Drehbewegungskorrekturen kann sowohl von der zentralen Steuereinheit 20c als auch von den jeweiligen lokalen Steuereinheiten der Windenergieanlagen 10c durchgeführt werden. Ein einfacher Algorithmus zur Berechnung eines solchen Korrekturausmaßes besteht darin, dieses Ausmaß in Abhängigkeit von der momentanen Winkeldifferenz zwischen tatsächlichem Drehwinkel und Soll-Drehwinkel festzulegen. Alternativ oder zusätzlich können hierfür auch Drehgeschwindigkeitsdifferenzen zwischen tatsächlicher Drehgeschwindigkeit und Soll-Drehgeschwindigkeit herangezogen werden.

In Fig. 5 ist ferner eine Kommunikationsverbindung 22c symbolisiert, über welche die Information über die Soll-Drehbewegung und/oder Informationen über eine oder mehrere der sensorisch erfassten Drehbewegungen der Rotorstrukturen 12c des Windparks 1c an ein Radarsystem kommuniziert werden, in dessen Erfassungsbereich sich der Windpark 1c befindet. Dies besitzt den Vorteil, dass seitens der externen technischen Einrichtung (hier also z. B. dem Radarsystem) eine für den Radarbetrieb wertvolle Information bereitgestellt wird. Diese Information kann bei ordnungsgemäßem Betrieb des Windparks 1c von dem Radarsystem (zusätzlich zu der rückreflektierten Radarstrahlung) nutzbringend mitverwendet werden.

Fig. 6 veranschaulicht nochmals den Ablauf eines Verfahrens zur geregelten Anpassung einer Drehbewegung an eine vorgegebene Soll-Drehbewegung. Das Verfahren kann z. B. in jeweiligen Steuereinheiten der auf diese Soll-Drehbewegung zu synchronisierenden Windenergieanlagen durchgeführt werden (alternativ z. B. in einer zentralen Steuereinheit, welche in Kommunikationsverbindung mit diesen Windenergieanlagen steht).

In einem ersten Schritt S1 erfolgt eine Erfassung (z. B. direkte Messung oder Berechnung aus geeigneten Messgrößen) der Ist-Drehbewegung der betreffenden Rotorstruktur.

In einem zweiten Schritt S2 erfolgt ein Vergleich zwischen der Ist-Drehbewegung und der vorgegebenen Soll-Drehbewegung sowie darauf basierend die Festlegung einer Drehbewegungskorrekturvorgabe in Abhängigkeit von einer Abweichung zwischen Ist- und Soll-Drehbewegung.

In einem dritten Schritt S3 erfolgt schließlich ein bedarfsweises Abbremsen bzw. Beschleunigen der betreffenden Rotorstruktur in Abhängigkeit von der im Schritt S2 festgelegten Korrekturvorgabe.

Sodann schreitet die Verarbeitung wieder zum ersten Schritt S1.

Im einfachsten Fall kann als "Drehbewegung" ein Drehwinkel und als "Korrekturvorgabe" die entsprechende Drehwinkeldifferenz verwendet werden. Wie bereits erwähnt kann die Drehbewegung gegebenenfalls auch noch durch weitere Parameter, insbesondere eine Drehgeschwindigkeit, charakterisiert werden, wobei dementsprechend z. B. eine Drehgeschwindigkeitsdifferenz (zwischen Ist-Drehgeschwindigkeit und Soll-Drehgeschwindigkeit) in die Festlegung der Korrekturvorgabe eingehen kann.

## Patentansprüche

1. Windpark (1), umfassend mehrere gleichartig jeweils mit einer drehbar gelagerten Rotorstruktur (12) ausgestattete Windenergieanlagen (10), Steuermittel (20) zur Steuerung des Betriebes der einzelnen Windenergieanlagen (10) und eine Kommunikationseinrichtung,
wobei die Steuermittel (20) dazu ausgebildet sind, die Drehbewegungen der Rotorstrukturen (12) wenigstens einiger der Windenergieanlagen (10) zu synchronisieren, und
wobei die Kommunikationseinrichtung dazu ausgebildet ist, eine Soll-Drehbewegung und/oder eine oder mehrere sensorisch erfasste Drehbewegungen der Rotorstrukturen (12) an ein Radarsystem zu kommunizieren.

2. Windpark nach Anspruch 1, wobei die Steuermittel (20) eine zentrale Steuereinheit zur Vorgabe einer bestimmten Soll-Drehbewegung für die betreffenden Rotorstrukturen (12) umfassen.

3. Windpark nach Anspruch 2, wobei die Soll-Drehbewegung als eine sensorisch erfasste Drehbewegung einer bestimmten der Rotorstrukturen (12) vorgesehen ist.

4. Verfahren zur Steuerung des Betriebes mehrerer gleichartig jeweils mit einer drehbar gelagerten Rotorstruktur (12) ausgestatteter Windenergieanlagen (10) in einem Windpark (1),
**dadurch gekennzeichnet, dass** die Drehbewegungen der Rotorstrukturen (12) wenigstens einiger der Windenergieanlagen (10) synchronisiert werden, und dass die Drehbewegungen der Rotorstrukturen (12) an ein Radarsystem kommuniziert werden.

5. Windenergieanlage (10) in einem Windpark (1), umfassend
- eine Erfassungseinrichtung zur Erfassung der Drehbewegung einer drehbar gelagerten Rotorstruktur (12) der Windenergieanlage (10),
- eine ansteuerbare Lastvariationseinrichtung zur Variation einer der Drehbewegung der Rotorstruktur (12) entgegenwirkenden Last und/oder eine ansteuerbare Effizienzverstelleinrichtung zur Variation der Windkraftumsetzungseffizienz der Rotorstruktur (12), und
- eine Steuereinrichtung zur Ansteuerung der Lastvariationseinrichtung bzw. der Effizienzverstelleinrichtung,
wobei die Steuereinrichtung dazu ausgebildet ist, die Lastvariationseinrichtung und/oder die Effizienzverstelleinrichtung für eine Synchronisation der Drehbewegung der Rotorstruktur (12) mit einer Soll-Drehbewegung anzusteuern, die von einem Radarsystem an die Steuereinrichtung der Windenergieanlage kommuniziert wird, und wobei die Erfassungseinrichtung dazu ausgebildet ist, die Drehbewegung der Rotorstruktur (12) an das Radarsystem zu kommunizieren.

6. Verfahren zur Steuerung des Betriebes einer Windenergieanlage (10) in einem Windpark (1), umfassend
- Erfassung der Drehbewegung einer drehbar gelagerten Rotorstruktur (12) der Windenergieanlage (10), und
- Variation einer der Drehbewegung der Rotorstruktur (12) entgegenwirkenden Last und/oder Variation der Windkraftumsetzungseffizienz der Rotorstruktur (12),
wobei die Lastvariation und/oder die Effizienzverstellung für eine Synchronisation der Drehbewegung der Rotorstruktur (12) mit einer Soll-Drehbewegung durchgeführt wird, die von einem Radarsystem an die Windenergieanlage (10) kommuniziert wird, wobei Drehbewegung der Rotorstruktur (12) an das Radarsystem kommuniziert wird.

## Claims

1. Wind farm (1), comprising multiple wind power installations (10), each equipped in the same manner with a rotatably mounted rotor structure (12), control means (20) for controlling the operation of the individual wind power installations (10) and a communication device,
wherein the control means (20) are designed to synchronize the rotary movements of the rotor structures (12) of at least some of the wind power installations (10), and
wherein the communication device is designed to communicate a desired rotary movement and/or one or more sensor-detected rotary movements of the rotor structures (12) to a radar system.

2. Wind farm according to Claim 1, wherein the control means (20) comprise a central control unit for specifying a particular desired rotary movement for the rotor structures (12) concerned.

3. Wind farm according to Claim 2, wherein the desired rotary movement is provided as a sensor-detected rotary movement of a particular one of the rotor structures (12).

4. Method for controlling the operation of multiple wind power installations (10), each equipped in the same manner with a rotatably mounted rotor structure (12), in a wind farm (1),
**characterized in that** the rotary movements of the rotor structures (12) of at least some of the wind power installations (10) are synchronized,
and **in that** the rotary movements of the rotor structures (12) are communicated to a radar system.

5. Wind power installation (10) in a wind farm (1), comprising
- a detection device for detecting the rotary movement of a rotatably mounted rotor structure (12) of the wind power installation (10),
- an activatable load variation device for varying a load counteracting the rotary movement of the rotor structure (12) and/or an activatable efficiency adjustment device for varying the wind power conversion efficiency of the rotor structure (12), and
- a control device for activating the load variation device or the efficiency adjustment device,
wherein the control device is designed to activate the load variation device and/or the efficiency adjustment device for a synchronization of the rotary movement of the rotor structure (12) with a desired rotary movement, which is communicated by a radar system to the control device of the wind power installation, and wherein the detection device is designed to communicate the rotary movement of the rotor structure (12) to the radar system.

6. Method for controlling the operation of a wind power installation (10) in a wind farm (1), comprising
- detecting the rotary movement of a rotatably mounted rotor structure (12) of the wind power installation (10), and
- varying a load, counteracting the rotary movement of the rotary structure (12), and/or varying the wind power conversion efficiency of the rotor structure (12),
wherein the load variation and/or the efficiency adjustment is carried out for a synchronization of the rotary movement of the rotor structure (12) with a desired rotary movement, which is communicated by a radar system to the wind power installation (10), wherein the rotary movement of the rotor structure (12) is communicated to the radar system.

## Revendications

1. Parc éolien (1), comprenant plusieurs éoliennes (10) respectivement équipées à l'identique d'une structure de rotor supportée de façon rotative (12), des moyens de commande (20) pour la commande du fonctionnement des éoliennes individuelles (10), et un système de communication, dans lequel les moyens de commande (20) sont configurés pour synchroniser les mouvements de rotation des structures de rotor (12) d'au moins quelques éoliennes (10), et dans lequel le système de communication est configuré pour communiquer un mouvement de rotation de consigne et/ou un ou plusieurs mouvement(s) de rotation des structures de rotor (12) détecté (s) par des capteurs à un système de radar.

2. Parc éolien selon la revendication 1, dans lequel les moyens de commande (20) comprennent une unité de commande centrale pour définir un mouvement de rotation de consigne déterminé pour les structures de rotor concernées (12).

3. Parc éolien selon la revendication 2, dans lequel le mouvement de rotation de consigne est prévu comme un mouvement de rotation détecté par des capteurs d'une des structures de rotor déterminée (12).

4. Procédé de commande du fonctionnement de plusieurs éoliennes respectivement équipées à l'identique d'une structure de rotor supportée de façon rotative (12) dans un parc éolien (1), **caractérisé en ce que** l'on synchronise les mouvements de rotation des structures de rotor (12) d'au moins quelques éoliennes (10) et **en ce que** l'on communique les mouvements de rotation des structures de rotor (12) à un système de radar.

5. Eolienne (10) dans un parc éolien (1), comprenant
- un système de détection pour la détection du mouvement de rotation d'une structure de rotor supportée de façon rotative (12) de l'éolienne (10),
- un système de variation de charge pouvant être commandé pour la variation d'une charge s'opposant au mouvement de rotation de la structure de rotor (12) et/ou un système de réglage de rendement pouvant être commandé pour la variation du rendement de conversion de la force du vent de la structure de rotor (12), et
- un système de commande pour la commande du système de variation de charge ou du système de réglage de rendement,
dans laquelle le système de commande est configuré pour commander le système de variation de charge et/ou le système de réglage de rendement pour une synchronisation du mouvement de rotation de la structure de rotor (12) avec un mouvement de rotation de consigne, qui est communiqué par un système de radar au système de commande de l'éolienne, et dans laquelle le système de détection est configuré pour communiquer le mouvement de rotation de la structure de rotor (12) au système de radar.

6. Procédé de commande du fonctionnement d'une éolienne (10) dans un parc éolien (1), comprenant
- la détection du mouvement de rotation d'une structure de rotor supportée de façon rotative (12) de l'éolienne (10), et
- la variation d'une charge s'opposant au mouvement de rotation de la structure de rotor (12) et/ou la variation du rendement de conversion de la force du vent de la structure de rotor (12),
dans lequel on opère la variation de la charge et/ou le réglage du rendement pour une synchronisation du mouvement de rotation de la structure de rotor (12) avec un mouvement de rotation de consigne, qui est communiqué par un système de radar à l'éolienne (10), dans lequel on communique le mouvement de rotation de la structure de rotor (12) au système de radar.
